# FASCICULE DE BREVET EUROPEEN

(11) **EP 2 817 775 B1**
(45) Date de publication et mention de la délivrance du brevet: **04.11.2015**
(21) Numéro de dépôt: 13702813.0
(22) Date de dépôt: 07.02.2013
(51) Int. Cl.: G06Q 30/02, H04L 29/08

(54) **PROCEDE DE MESURE D'AUDIENCE**
PUBLIKUMSMESSVERFAHREN
AUDIENCE-MEASURING METHOD

(30) Priorité: 21.02.2012 FR 1251573
(43) Date de publication de la demande: 31.12.2014
(73) Titulaire: Viaccess, 92057 Paris La Défense (FR)
(72) Inventeur: GASNIER, Jean-Marc, F-35230 Noyal-Chatillon-sur-Seiche (FR)
(74) Mandataire: GIE Innovation Competence Group
(86) Numéro de dépôt international: PCT/EP2013/052401
(87) Numéro de publication internationale: WO 2013/124159

(56) Documents cités:
- US-A1- 2004 215 698
- Shahzad Ali, Anket Mathur and Hui Zhang: "Measurement of commercial peer-to-peer live video streaming", School of Computer Science Carnegie Mellon University , 2 janvier 2006 (2006-01-02), XP002687383, Extrait de l'Internet: URL:http://gredes.ifto.edu.br/wp-content/u ploads/Measurement-of-Commercial-Peer-To-P eer-Live-Video-Streaming.pdf [extrait le 2012-11-16]

## Description

L'invention concerne un procédé de mesure d'audience d'une chaîne de télévision diffusée en flux continu sur un réseau pair-à-pair. L'invention a également pour objet un support d'enregistrement d'informations, un pair contrôlé et un poste de recensement pour la mise en oeuvre de ce procédé.

Par «diffusion en flux continu», on désigne un mode de transmission d'un contenu multimédia dans lequel un équipement client peut jouer le contenu multimédia au fur et à mesure qu'il le reçoit. La «diffusion en flux continu » est plus connue sous le terme anglais de «streaming » ou sous l'anglicisme de diffusion en « live ».

La diffusion en flux continu se distingue du « téléchargement de fichier». Dans le téléchargement de fichiers, l'équipement client doit d'abord recevoir la totalité des paquets constituant le contenu multimédia avant de pouvoir commencer à jouer ce contenu multimédia. Il n'existe pas un ordre prédéterminé ou un intervalle de temps prédéterminé dans lequel un fragment du fichier doit être reçu par son destinataire.

Au contraire, en diffusion en flux continu, les fragments du flux doivent être reçus dans un intervalle de temps prédéterminé autour de l'instant de réception d'un fragment précédent de ce même flux. Si le fragment n'est pas reçu dans l'intervalle de temps prédéterminé, il est éliminé et ne sera pas lu par le lecteur multimédia. Pour cela, typiquement, chaque fragment est associé à une durée de vie. Si le fragment n'a pas atteint son destinataire avant que sa durée de vie se soit écoulée, celui-ci est détruit. Ainsi, la lecture d'une chaîne de télévision peut commencer avant que n'aient été reçus tous les fragments qui la constituent. Pour cela, tous les fragments empruntent généralement la même route dans le réseau Internet. Par exemple, une table de routage préétablie est construite et utilisée à cet effet.

Le document Shahzad Ali, Anket Mathur and Hui Zhang: "Measurement of commercial peer-to-peer live video streaming",School of Computer Science Carnegie Mellon University,2 janvier 2006 divulgue un procédé de mesure de la performance d'une chaîne de télévision diffusée en flux continu sur un réseau pair-à-pair de l'art antérieur.

Les réseaux pair-à-pair ou « poste à poste » sont plus connus sous le terme anglais de réseau « Peer-to-peer ».

Un tel réseau pair-à-pair est formé par une multitude d'ordinateurs, appelés pairs, connectés les uns aux autres par un réseau de transmission d'informations. Typiquement, le réseau de transmission d'informations est la toile d'araignée mondiale plus connue sous le terme de réseau Internet ou sous le terme anglais de « World Wide Web ».

Dans un réseau pair-à-pair, un pair peut télécharger un fragment d'une chaîne de télévision à partir de la mémoire tampon d'un quelconque autre pair du réseau pair-à-pair qui reçoit la même chaîne de télévision. Dans cette description, le pair qui télécharge le fragment est dit « pair fils » et le pair à partir duquel le pair fils télécharge le fragment est dit « pair parent ». Dans un réseau pair-à-pair, chaque pair est apte à jouer, généralement en même temps, les rôles de pair fils et de pair parent. Ainsi, un pair est apte à jouer à la fois les rôles de client, de serveur et de routeur pour diriger les fragments enregistrés dans sa mémoire tampon vers la mémoire tampon des pairs fils.

Dans un réseau pair-à-pair, un pair fils contient une liste de pairs voisins. Cette liste contient des identifiants de pairs, dits « pairs voisins », du réseau pair-à-pair que ce pair connaît et peut donc contacter pour essayer de télécharger un fragment de la chaîne de télévision. Typiquement, l'identifiant d'un pair est son adresse IP (Internet Protocol) et un numéro de port utilisés pour échanger, par l'intermédiaire du réseau Internet, des informations avec l'application informatique qui gère la connexion et la mise en oeuvre du réseau pair-à-pair. Cette application est ici appelée « logiciel pair-à-pair ».

Les diffusions de chaînes de télévision en flux continu sur les réseaux pair-à-pair se développent rapidement et l'on suppose qu'il existe aujourd'hui un grand nombre de spectateurs pour chaque chaîne de télévision ainsi diffusée. A ce jour, pour mesurer l'audience d'une chaîne de télévision diffusée en flux continu sur un réseau pair-à-pair, il faut équiper un grand nombre de pairs d'un dispositif enregistreur. Cela implique donc la participation active du spectateur pour que celui-ci accepte et installe cet enregistreur sur l'ordinateur qu'il connecte au réseau pair-à-pair (voir par exemple la demande de brevet WO 2011 084 779).

Les mesures d'audience ainsi construites sont peu exhaustives à cause du nombre nécessairement limité de pairs équipés de l'enregistreur.

De l'état de la technique est également connu de :
- Shahzad Ali, Anket Mathur et Hui Zhang : « Measurment of commercail peer-to-peer live video streaming », School of computer Science Carnegie Mellon University, 2 janvier 2006,
- US2004/215698A1.

L'invention vise à remédier à cet inconvénient. Elle a donc pour objet un procédé de mesure d'audience d'une chaîne de télévision diffusée en flux continu sur un réseau pair-à-pair conforme à la revendication 1.

La mesure d'audience construite à l'aide du procédé ci-dessus est plus simple car elle ne nécessite pas d'équiper chaque pair utilisé pour mesurer l'audience d'un dispositif enregistreur. En effet, le fait d'utiliser les listes de pairs voisins transmises par des pairs dits « classiques», c'est-à-dire non équipés d'un dispositif enregistrement particulier, pour faire de la mesure d'audience permet simplement de recueillir les informations d'audience auprès des pairs classiques. Dès lors, il est plus facile de recueillir une quantité d'informations bien plus importante, ce qui accroît l'exhaustivité de la mesure d'audience construite.

Les modes de réalisation de ce procédé peuvent comporter une ou plusieurs des caractéristiques des revendications dépendantes de procédé.

Ces modes de réalisation du procédé présentent en outre les avantages suivants :
- la réitération en boucle des étapes b) à d) par le pair contrôlé permet de construire, plus rapidement qu'un pair classique, une liste de pairs voisins beaucoup plus complète et donc d'obtenir plus rapidement une mesure d'audience ou d'obtenir une mesure d'audience plus précise ;
- l'utilisation simultanée de plusieurs pairs contrôlés permet d'accroître la rapidité avec laquelle une mesure d'audience peut être construite ;
- l'indication dans la table de recensement qu'un pair ne répond plus, permet d'avoir une vision instantanée plus précise de l'audience de la chaîne de télévision ;
- la présence, dans la table de recensement, de l'instant d'ajout d'un pair voisin et de l'instant à partir duquel ce pair voisin ne reçoit plus la chaîne de télévision, permet une mesure d'audience prenant en compte la durée des connections à la chaîne de télévision ;
- l'identification de segments de la chaîne de télévision permet de corréler la mesure d'audience à un contenu multimédia identifié ;
- l'obtention d'un identifiant d'une zone géographique à partir de l'adresse IP du pair voisin permet de faire des mesures d'audience par pays ;
- répartir les adresses IP des différents pairs contrôlés sur différents continents est susceptible d'accroître la vitesse de collecte d'un grand nombre d'identifiants de pairs voisins.

L'invention a également pour objet un procédé de visualisation d'une chaîne de télévision diffusée en flux continu sur un réseau pair-à-pair conforme à la revendication 9.

L'invention a également pour objet un support d'enregistrement d'informations conforme à la revendication 10.

L'invention a également pour objet un pair contrôlé pour la mise en oeuvre du procédé ci-dessus de mesure d'audience.

Enfin, l'invention a également pour objet un poste de recensement pour la mise en oeuvre du procédé ci-dessus de mesure d'audience.

L'invention sera mieux comprise à la lecture de la description qui va suivre, donnée uniquement à titre d'exemple non limitatif, et faite en ce référant aux dessins sur lesquels :
- la figure 1 est une illustration schématique d'un système de visualisation d'une chaîne de télévision en flux continu diffusée sur un réseau pair-à-pair ;
- la figure 2 est une illustration schématique de différentes mémoires tampons d'un pair du réseau pair-à-pair de la figure 1 ;
- les figures 3 à 6 sont des illustrations schématiques de différentes listes et table utilisées dans le système de la figure 1 ;
- la figure 7 est un organigramme d'un procédé de visualisation d'une chaîne de télévision à l'aide du système de la figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

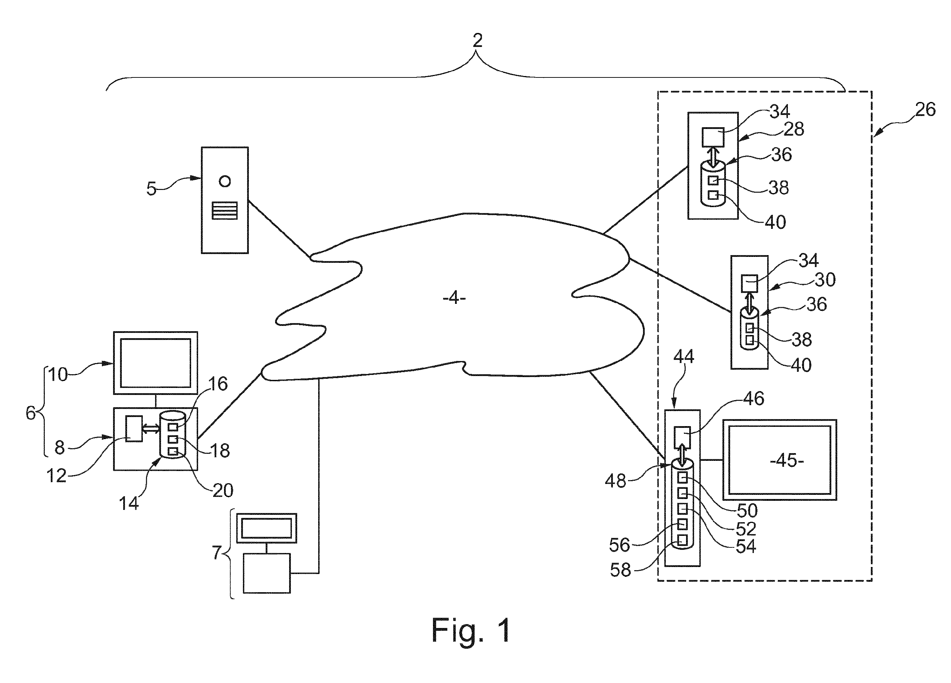

La figure 1 représente un système de visualisation de chaînes de télévision diffusées en flux continu sur un réseau pair-à-pair formé de pairs raccordés entre eux par un réseau 4 de transmission d'informations. Le réseau 4 est la toile d'araignée mondiale. Le système 2 est décrit dans le cas particulier où le réseau pair-à-pair utilise le protocole SopCast. Ce protocole est par exemple décrit dans les articles suivants :
- Benny Fallica et al., « On the Quality of Experience of SopCast »*,*
- Philipp Eittenberger et al., « Measurement and analysis of live streamed P2PTV Traffic», HET-NETs 2010, ISBN 978-83-926054-4-7, pages 195 à 212.

La suite de la description est faîte pour une seule chaîne de télévision. Toutefois, ce qui est décrit pour cette chaîne de télévision s'applique à l'identique aux autres chaînes de télévision diffusées sur le même réseau pair-à-pair.

Le système 2 comprend un serveur 5 de liste initiale de pairs voisins. Ce serveur est connu sous le terme anglais de « broker » ou « tracker ».

Le système 2 comprend une multitude de pairs classiques connectés les uns aux autres par l'intermédiaire du réseau 4. Pour simplifier la figure 1, seuls deux pairs classiques 6 et 7 sont représentés. Ces pairs 6 et 7 sont par exemple identiques et seul le pair 6 est décrit en détail.

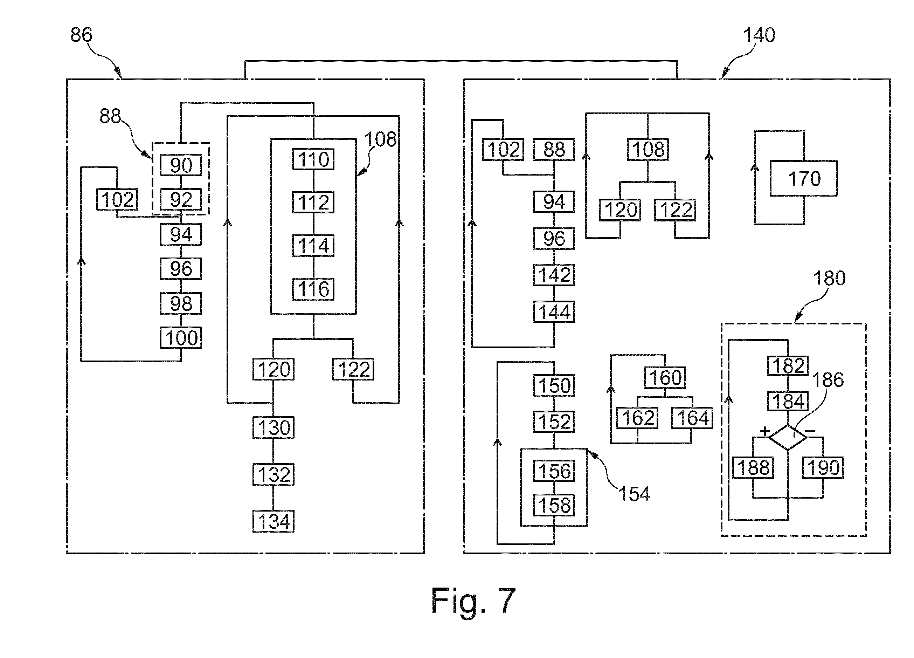

Le pair 6 est un ordinateur équipé d'une unité centrale 8 et d'un écran 10. L'unité centrale 8 comprend un calculateur électronique 12 programmable apte à exécuter des instructions enregistrées sur un support d'enregistrement d'informations. A cet effet, le calculateur 12 est raccordé à une mémoire 14 contenant les instructions nécessaires pour l'exécution du procédé de la figure 7. Plus précisément, la mémoire 14 comprend notamment :
- les instructions d'un logiciel pair-à-pair 16 apte à télécharger en flux continu les différents segments de vidéo d'une chaîne de télévision,
- les instructions d'un lecteur multimédia 18 apte à jouer un contenu multimédia téléchargé sur l'écran 10, et
- une liste 20 de pairs voisins construite par le logiciel 16.

Le logiciel pair-à-pair 16 est ici un module client SopCast.

Le pair 6 est raccordé au réseau 4. A cet effet, il possède une adresse IP (Internet Protocol) et un numéro de port associé au module client SopCast. Cette adresse IP et ce numéro de port sont utilisés par le pair 6 pour communiquer avec d'autres pairs du réseau pair-à-pair.

Le système 2 comprend également un appareil 26 de mesure d'audience d'une chaîne de télévision diffusée en flux continu sur le réseau pair-à-pair. Cet appareil 26 comprend une multitude de pairs contrôlés. Ici, les pairs contrôlés de l'appareil 26 sont implémentés sur des machines virtuelles exécutées sur différents serveurs répartis dans différents pays sur différents continents. Ainsi, les pairs contrôlés ont des adresses IP correspondant à différents pays sur différents continents d'après la nomenclature des adresses IP établie par l'IANA (Internet Assigned Numbers Authority).

Ces pairs contrôlés sont par exemple structurellement identiques les uns aux autres. Pour simplifier la figure 1, seuls deux pairs contrôlés 28 et 30 sont représentés. Ces pairs sont implémentés sur des serveurs différents et ont donc des adresses IP différentes.

Seul le pair contrôlé 28 est décrit plus en détail. Le pair 28 comporte un calculateur électronique 34 programmable apte à exécuter des instructions enregistrées sur un support d'enregistrement d'informations. A cet effet, le pair 28 comporte une mémoire 36 contenant les instructions nécessaires pour l'exécution du procédé de la figure 7. Plus précisément, la mémoire 36 comporte les instructions d'un module client SopCast 38 . Ce module client 38 est identique au module 16, mais comporte en plus des fonctions supplémentaires qui seront décrites en regard du procédé de la figure 7. La mémoire 36 comporte également une liste 40 de pairs voisins.

L'appareil 26 comporte aussi un poste 44 de recensement éventuellement raccordé à un écran 45.

Le poste 44 comprend un calculateur électronique 46 programmable apte à exécuter des instructions enregistrées sur un support d'enregistrement pour exécuter le procédé de la figure 7. A cet effet, le calculateur 46 est raccordé à une mémoire 48 contenant les instructions nécessaires pour l'exécution du procédé de la figure 7.

Plus précisément, la mémoire 48 comporte ici :
- les instructions d'un module client SopCast 50 identique au module 16,
- les instructions d'un lecteur multimédia 52 identique au lecteur multimédia 18,
- les instructions d'un module 54 de construction d'une mesure d'audience,
- une table 56 de recensement, et
- une base de données 58 d'empreintes numériques de contenus multimédias.

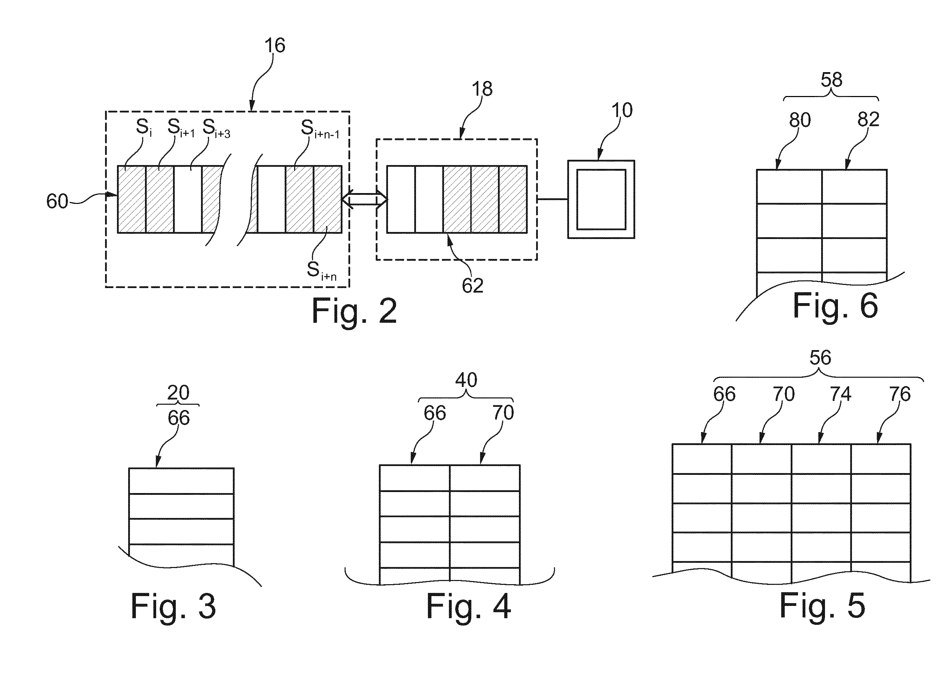

La figure 2 représente plus en détail les mémoires tampons d'un pair classique. Le module client 16 implémente une mémoire tampon 60 apte à contenir une durée ΔT de la chaîne de télévision diffusée à un moment donné. Typiquement, la durée ΔT est inférieure ou égale à 1 min et supérieure à 15s. Ici, la durée ΔT est égale à 40s à plus ou moins 5s près. Plus précisément, la chaîne de télévision est divisée en une multitude de segments temporels Sᵢ immédiatement consécutifs les uns aux autres. Ces segments temporels Sᵢ sont connus sous le terme anglais de « chunk ». Ici, l'indice i représente le numéro d'ordre d'un segment temporel. Cet indice i identifie la position du segment par rapport aux autres segments de la même chaîne de télévision. Par exemple, les segments Sᵢ sont classés par numéros d'ordre croissant.

La mémoire tampon 60 est conçue pour contenir « n » segments Sᵢ à Sᵢ₊ₙ.

Sur la figure 2, les traits ondulés indiquent que seule une partie de la mémoire 60 a été représentée.

Sur la figure 2, les segments Sᵢ hachurés sont des segments déjà reçus par le module client 16 et qui peuvent être téléchargés par d'autres pairs du réseau pair-à-pair. A l'inverse, les segments Sᵢ en blanc sont des segments à télécharger par le module client 16 auprès d'un ou plusieurs pairs parents.

On comprend donc que grâce à l'utilisation de cette mémoire tampon 60, un segment Sᵢ peut être reçu en avance ou en retard par rapport aux segments Sᵢ₋₁ et Sᵢ₊₁. La fenêtre temporelle à l'intérieur de laquelle doit être reçu le segment Sᵢ est fonction de la durée ΔT. Si le segment Sᵢ n'est pas reçu dans cette fenêtre temporelle, celui-ci est éliminé et ne peut pas être visualisé sur l'écran 10.

Le lecteur multimédia 18 implémente aussi une mémoire tampon 62 dans laquelle sont transférés les différents segments Sᵢ de la chaîne de télévision à regarder depuis la mémoire tampon 60 au fur et à mesure de la lecture et de l'affichage du contenu multimédia sur l'écran 10.

La figure 3 représente la liste 20 de pairs voisins. Cette liste 20 comprend essentiellement, pour chaque enregistrement, un champ 66 destiné à contenir l'adresse IP et le numéro de port du module client 16 du pair classique « voisin » du pair 6. Par exemple, le champ 20 peut contenir l'adresse IP et le numéro de port du module client du pair 7.

La figure 4 représente la liste 40 de pairs voisins. Cette liste 40 est identique à la liste 20, sauf, qu'elle comporte en plus un champ 70 destiné à contenir l'instant d'ajout du pair voisin dans la liste 40. Ce champ 70 est associé à chaque champ 66 contenant une adresse IP et un numéro de port.

La figure 5 représente la table 56 de recensement. Cette table 56 est identique à la liste 40, sauf qu'elle comporte en plus des champs 74 et 76 pour chaque enregistrement. Le champ 74 est destiné à contenir l'instant de déconnexion d'un pair voisin. Le champ 76 est destiné à contenir un identifiant d'une zone géographique correspondant à l'adresse IP du pair voisin. La zone géographique peut être un continent, un groupe de pays, un pays, une région d'un pays ou une ville.

La figure 6 représente la base de données 58. Cette base de données contient, pour chaque enregistrement, essentiellement un champ 80 contenant une empreinte numérique et un champ 82 contenant un identifiant du contenu multimédia correspondant à cette empreinte numérique. Les empreintes numériques sont des empreintes numériques de contenu multimédia. Par exemple, elles sont construites conformément au procédé décrit dans la demande WO 2009 141 378. L'identifiant du contenu multimédia peut être un titre de film ou d'une émission ou d'un événement sportif ou autre.

Le fonctionnement du système 2 va maintenant être décrit en référence au procédé de la figure 7.

Le procédé comporte une phase 86 de visualisation, par un pair classique, d'une chaîne de télévision diffusée en flux continu sur le réseau pair-à-pair du système 2. Cette phase 86 est décrite dans le cas particulier où le pair 6 est un pair fils et le pair 7 est un pair parent.

Lors d'une étape 88, le pair 6 se connecte au réseau pair-à-pair. Lors de cette étape 88, et plus précisément lors d'une opération 90, le pair 6 acquiert l'identifiant de la chaîne de télévision à regarder. Par exemple, il s'agit du numéro de la chaîne de télévision.

Ensuite, lors d'une opération 92, le module client 16 du pair 6 envoie une requête au serveur 5 pour obtenir une première liste de pairs voisins regardant actuellement la même chaîne de télévision.

Lors d'une étape 94, le module client 16 reçoit cette liste de pairs voisins. Cette liste de pairs voisins contient les adresses IP et les numéros de ports des modules clients exécutés par les pairs voisins.

Ensuite, lors d'une étape 96, le pair fils envoie une requête aux pairs contenus dans la liste reçue pour distinguer dans cette liste les pairs actifs des pairs inactifs.

Si le pair qui a reçu la requête répond, et si celui-ci n'est pas déjà dans la liste 20 du pair 6, lors d'une étape 98, le pair 6 met à jour la liste 20. Cette mise à jour consiste à ajouter dans la liste 20 l'adresse IP et le numéro de port du module client du pair voisin ayant répondu. Ainsi, la liste 20 contient les adresses IP et les numéros de ports des modules clients des pairs auprès desquels le pair 6 est susceptible de télécharger un fragment de la chaîne de télévision qu'il a sélectionnée.

Lors d'une étape 100, les pairs interrogés par le pair fils ajoutent également dans leur propre liste 20 de pairs voisins l'adresse IP et le numéro de port du module client 16 du pair 6.

S'il est nécessaire que de nouveaux pairs voisins soient découverts, alors on procède à une étape 102 lors de laquelle le pair 6 envoie une requête à l'un des pairs voisins, dont l'adresse est contenue dans sa propre liste 20, pour recevoir la liste de pairs voisins de ce pair voisin. Par exemple, le pair 6 envoie la requête au pair 7. L'étape 102 se poursuit alors par l'étape 94.

La réitération des étapes 94 à 102 permet au pair 6 de compléter sa propre liste 20 et donc de découvrir de nouveaux pairs voisins.

En parallèle, lors d'une étape 108, le pair 6 procède au téléchargement de segments de la chaîne de télévision. Pour cela, lors d'une opération 110, il demande à un pair voisin, dont l'adresse IP est contenue dans sa liste 20, les identifiants des segments Sᵢ que contient la mémoire tampon de ce pair voisin.

Lors d'une opération 112, en réponse, le pair 6 reçoit du pair voisin la liste des segments Sᵢ qu'il contient.

Si cette liste reçue contient des identifiants de segments que le pair fils ne possède pas, alors, lors d'une opération 114, le pair fils requiert auprès de ce pair voisin la transmission d'un ou plusieurs des segments qui lui manquent.

En réponse, lors d'une opération 116, le pair voisin, qui est également à partir de ce moment-là un pair parent, envoie au pair fils les segments demandés.

Si le segment demandé au pair voisin est reçu dans la fenêtre temporelle requise, lors d'une étape 120, le pair fils enregistre le segment téléchargé dans sa mémoire tampon 60. Dans le cas contraire, lors d'une étape 122, si le segment n'est pas reçu dans la fenêtre temporelle requise, le pair 6 réitère les étapes 110 à 122 avec le pair voisin suivant identifié dans sa liste 20.

Ainsi, assez rapidement, le pair 6 identifie un ou plusieurs pairs parents, généralement moins de cinq ou moins de trois, à partir de la mémoire tampon 60 desquels il peut télécharger à temps les segments nécessaires pour remplir sa propre mémoire 60. Par « remplir à temps », on désigne le fait que les segments téléchargés sont reçus à temps pour remplir, au-delà d'un seuil prédéterminé S₁, la mémoire tampon 60 de segments immédiatement consécutifs. Par exemple, le seuil S₁ correspond à deux, trois ou plus de dix segments Sᵢ consécutifs. A partir de ce moment-là, il n'est plus nécessaire de réitérer les étapes 94 à 102. Par conséquent, le pair 6 met fin à l'itération des étapes 94 à 102.

Lors d'une étape 130, quand le nombre de segments téléchargés est supérieur à un seuil prédéterminé S₂, le pair 6 lance l'exécution du lecteur multimédia 18.

Lors d'une étape 132, le lecteur multimédia 18 télécharge les segments de vidéo de la mémoire 60 vers sa propre mémoire tampon 62.

Ensuite, lors d'une étape 134, le lecteur multimédia 18 joue dans l'ordre les segments vidéo sur l'écran 10.

Les rôles de pair fils et de pair parent peuvent être inversés. Ainsi, classiquement, le pair 6 est un pair fils pour plusieurs pairs du réseau pair-à-pair et, également dans le même temps, un pair parent pour un ou plusieurs pairs de ce même réseau pair-à-pair.

En parallèle de la phase 86, une phase 140 de mesure d'audience de la chaîne de télévision diffusée en flux continu sur ce réseau pair-à-pair est exécutée.

Les différents pairs contrôlés fonctionnent de la même façon. Ainsi, la phase 140 est uniquement décrite dans le cas particulier du pair contrôlé 28.

Le pair contrôlé 28 procède aux mêmes étapes 88 à 122 qu'un pair classique sauf que les étapes 98 et 100 sont remplacées, respectivement par des étapes 142 et 144. L'étape 142 est identique à l'étape 98, sauf que l'adresse IP et le numéro de port du nouveau pair voisin sont ajoutés dans la liste 40 et que cette adresse IP et ce numéro de port sont associés à un instant d'entrée dans cette liste 40 mémorisée dans le champ 70. L'instant d'entrée est par exemple mesuré à partir d'une horloge internet du pair 28.

L'étape 144 est exécutée lorsque le pair 28 est interrogé par d'autres pairs classiques. Elle est identique à l'étape 100 sauf que l'adresse IP et le numéro de port sont enregistrés dans la liste 40 associés à un instant d'entrée dans cette liste 40.

Dans ce mode de réalisation, le pair contrôlé 28 n'exécute pas les étapes 130 à 134.

Le pair contrôlé 28 diffère du pair classique 6 en ce qu'il exécute une boucle infinie contenant les étapes 94 à 102. Ainsi, l'étape 102 est réitérée systématiquement en boucle pour chaque nouveau pair voisin ajouté à la liste 40. De plus, cette itération des étapes 94 à 102 n'est pas arrêtée même si la liste 40 contient déjà des pairs voisins à partir de la mémoire 60 desquels le pair contrôlé 28 peut télécharger à temps les segments nécessaires pour remplir sa propre mémoire 60.

Dans ce mode de réalisation, le fait que le pair contrôlé télécharge les segments, lui permet de jouer le rôle de pair parent vis-à-vis d'autres pairs fils du réseau pair-à-pair. Cela permet de découvrir d'autres pairs voisins que ceux contenus dans la liste reçue lors de l'étape 94.

En parallèle, lors d'une étape 150, le module 54 de construction de la mesure d'audience demande à chaque pair contrôlé sa propre liste 40 de pairs voisins.

En réponse, lors d'une étape 152, chaque pair contrôlé transmet sa liste 40 au poste 44 de recensement.

Lors d'une étape 154, le module 54 de construction établit la table 56 à partir des différentes listes 40 reçues. Pour cela, lors d'une opération 156, il ajoute à cette table 56 chaque nouveau pair voisin non déjà présent dans la table. Pour chaque pair voisin ajouté, les champs 66 et 70 sont complétés à partir des champs correspondants de la liste 40 reçue.

Ensuite, pour chaque nouveau pair voisin ajouté, lors d'une opération 158, le module 54 procède à la géolocalisation de son adresse IP. La géolocalisation de l'adresse IP consiste à identifier une zone géographique et typiquement un pays, à partir de l'adresse IP enregistrée dans le champ 66 de la table 56. Une telle géolocalisation est connue. Par exemple, elle est réalisée en mettant en oeuvre des services accessibles sur des sites Internet comme : www.localiser-ip.com ou www.loc8ip.com. L'identifiant de la zone géographique ainsi obtenu est enregistré dans le champ 76 de la table 56 associée à l'adresse IP du pair voisin ajouté.

Les étapes 150 à 154 sont réitérées en boucle, par exemple, à intervalle régulier inférieur à 1 minute ou à 15 secondes.

En parallèle, lors d'une étape 160, le module 54 de construction exécute une boucle infinie dans laquelle il interroge chaque pair dont l'adresse IP figure dans le champ 66. Par exemple, lors de l'étape 160, le module 54 envoie au pair une commande « hello ».

Si le pair interrogé répond, alors, lors d'une étape 162, le module 54 laisse le champ 74 associé à ce pair vide pour indiquer que ce pair est toujours connecté à la chaîne de télévision.

Dans le cas contraire, lors d'une étape 164, le module 54 indique dans le champ 74, associé à l'adresse IP de ce pair voisin, un instant de déconnexion. L'instant de déconnexion est ici pris égal à la date à laquelle l'absence de réponse de ce pair a été découverte par le module 54. La date est par exemple une durée en seconde exprimée depuis une origine connue.

En parallèle, lors d'une étape 170, le module 54 construit la mesure d'audience. La mesure d'audience consiste à dénombrer le nombre de pairs dans la table 56 présents dans une zone géographique sélectionnée et dont le champ 74 est vide. Cela permet d'obtenir le nombre de pairs regardant actuellement la chaîne de télévision sur le réseau pair-à-pair dans la zone géographique sélectionnée. La zone géographique peut être l'ensemble des zones géographiques identifiables ou une zone géographique plus limitée telle qu'un pays ou une région ou une ville.

Lors de l'étape 170, d'autres traitements peuvent être réalisés comme la mesure du temps moyen de connexion à cette chaîne de télévision sur le réseau pair-à-pair. Ce temps moyen de connexion peut être calculé à partir des différences entre les instants contenus dans les champs 70 et 74.

Typiquement, l'étape 170 est réitérée en boucle avec une fréquence inférieure à 1 ou 5 minutes pour rafraîchir la mesure d'audience en temps réel.

Par exemple, lors de l'étape 170, la mesure d'audience construite est affichée sur l'écran 45. A cet effet, l'écran 45 présente une carte du monde et la mesure d'audience réalisée pour chaque pays est affichée sur cette carte du monde. La durée moyenne de connexion peut également être affichée.

Enfin, lors d'une étape 180, le poste 44 de recensement identifie le contenu multimédia regardé. A cet effet, lors d'une opération 182, le poste 44 télécharge un ou plusieurs segments de la chaîne de télévision auprès d'un pair classique ou d'un pair contrôlé.

Ensuite, lors d'une opération 184, il construit une empreinte numérique pour l'ensemble des segments téléchargés. Par exemple, cette empreinte numérique est construite conformément à l'enseignement de la demande WO 2009 141 378.

Lors d'une opération 186, le poste 44 compare l'empreinte numérique construite aux empreintes numériques contenues dans le champ 80 de la base de données 58.

Lors d'une opération 188, si l'empreinte numérique construite correspond à l'une des empreintes numériques préenregistrées, alors, l'identifiant du contenu multimédia associé à cette empreinte numérique est associé à la mesure d'audience construite au même instant pour ces segments.

Dans le cas contraire, lors d'une opération 190, aucun identifiant de contenu multimédia n'est associé à ces segments. Typiquement, l'identifiant du contenu multimédia est associé à un instant de diffusion mesuré depuis la même origine que les instants enregistrés dans le champ 74. Ainsi, il est possible de préciser le nombre de pairs ayant visualisé le contenu multimédia identifié.

De nombreux autres modes de réalisations sont possibles. Par exemple, le réseau pair-à-pair peut utiliser d'autres protocoles que le protocole SopCast. A titre d'illustration, les protocoles suivants peuvent être utilisés : Coolstreaming, PPLive, PPStream, TVAnts, Veetle, BT Live, etc...

Dans un autre mode de réalisation, l'appareil 26 ne comporte qu'un seul pair contrôlé. Dans ce cas, la liste 40 de pairs voisins et la table 56 sont les mêmes objets. De préférence, dans ce cas, le module 54 de construction de la mesure d'audience est également implémenté dans le pair contrôlé. Ainsi, dans ce mode de réalisation, le poste de recensement et le pair contrôlé sont réunis dans le même appareil.

La répartition des différents pairs contrôlés sur différents continents n'est pas obligatoire. Ainsi, les différents pairs contrôlés peuvent aussi avoir des adresses IP localisées dans un même pays ou dans une même région.

Les pairs contrôlés ne sont pas nécessairement implémentés sur des machines virtuelles. Dans un autre mode de réalisation, chaque pair contrôlé est implémenté dans un ordinateur conventionnel.

Le pair contrôlé peut être dépourvu ou non de lecteur multimédia ou de fonction permettant de jouer la chaîne de télévision diffusée.

En variante, l'interrogation des pairs voisins pour vérifier qu'ils sont connectés à la chaîne de télévision est réalisée par les pairs contrôlés plutôt que par le poste de recensement.

Dans un autre mode de réalisation, le pair contrôlé ne procède pas au téléchargement des segments de la chaîne de télévision. Ainsi, les étapes 108, 120 et 122 sont omises.

La géolocalisation des adresses IP peut être omise. Dans ce cas, la mesure d'audience se contente de dénombrer l'ensemble des pairs dans le monde entier ayant visualisé la chaîne de télévision. Dans ce mode de réalisation, le champ 76 est omis.

Il n'est pas nécessaire de relever les instants de déconnexions pour réaliser une mesure d'audience. Dans ce cas, le champ 74 est omis et les étapes 160 à 164 sont également omises. Dans ce mode de réalisation, on mesure simplement le nombre de pairs ayant visualisé la chaîne de télévision pendant l'intervalle de temps où l'appareil 26 a fonctionné.

Dans un autre mode de réalisation, dans les listes 40 transmises au poste 44 de recensement, d'autres identifiants des pairs voisins sont utilisés que l'adresse IP. Cet autre identifiant est typiquement appelé un alias. Il est construit à partir de l'adresse IP et, éventuellement, à partir du numéro de port et identifie de façon unique le pair voisin mais ne permet pas au poste 44 de retrouver l'adresse IP correspondante à partir des seules informations contenues dans l'alias. L'alias est également construit de telle façon à ce que quel que soit le pair contrôlé qui le construit, l'alias obtenu pour la même adresse IP est le même. Ceci permet de masquer les adresses IP aux yeux du poste 44 de recensement. Dans ce mode de réalisation, de préférence, la géolocalisation est faite par les pairs contrôlés. L'alias est par exemple obtenu en cryptant l'adresse IP du pair voisin avec une clé de chiffrement.

L'identification des contenus multimédias diffusés sur la chaîne de télévision peut être réalisée par d'autres méthodes. Par exemple, les contenus multimédia diffusés sur cette chaîne de télévision peuvent avoir été tatoués préalablement à leur diffusion. Les méthodes de tatouage sont connues sous le terme anglais de « watermark » ou « watermarking ». Il s'agit par exemple des méthodes développées par les sociétés DIGIMARC® ou CIVOLUTION®.

L'identification des contenus multimédias diffusés peut aussi être réalisée par les pairs contrôlés. Dans ce cas, la liste 40 transmise par chaque pair contrôlé au poste de recensement est complétée à l'aide de l'identifiant du contenu multimédia lorsque celui-ci a pu être identifié. Dans un autre mode de réalisation, les pairs contrôlés construisent l'empreinte numérique ou extraient le tatouage des fragments téléchargés. Ensuite, ils transmettent l'empreinte construite ou le tatouage extrait au poste de recensement. Le poste de recensement procède alors à l'identification du contenu multimédia en exécutant, par exemple, les étapes 186 à 190.

Dans un autre mode de réalisation, les pairs contrôlés construisent l'empreinte numérique ou extraient le tatouage puis ils transmettent les empreintes numériques ou le tatouage au poste de recensement pour un comparaison ultérieure avec la base de données 58 des contenus. Ainsi, l'identification du contenu multimédia peut aussi être réalisée à posteriori, c'est-à-dire longtemps après que les segments aient été téléchargés.

Enfin, dans un mode de réalisation simplifié, l'identification du contenu multimédia est omise. Dans ce cas, la base de données 58 peut être omise et l'étape 180 est omise.

## Revendications

1. Procédé de mesure d'audience d'une chaîne de télévision diffusée en flux continu sur un réseau pair-à-pair, ce procédé comportant :
a) la connexion (88) d'au moins un pair, dit contrôlé, au réseau pair-à-pair,
b) l'envoi (102) par le pair contrôlé d'une requête à au moins un autre pair, dit voisin, du réseau pair-à-pair, un identifiant de ce pair voisin étant contenu dans sa propre liste de pairs voisins,
c) en réponse à cette requête, la réception (94) par le pair contrôlé d'une liste de pairs voisins recevant la même chaîne de télévision en flux continu sur le réseau pair-à-pair et contenant à cet effet dans leur mémoire tampon respective des segments de la chaîne de télévision susceptibles d'être téléchargés par l'un quelconque des pairs du réseau pair-à-pair,
d) la mise à jour (142) par le pair contrôlé de sa propre liste de pairs voisins en ajoutant à cette liste des identifiants de pairs voisins présents dans la liste reçue lors de l'étape c) et qui n'étaient pas déjà présents dans sa propre liste de pairs voisins, **caractérisé en ce que** le procédé comporte également la construction (170) de la mesure d'audience à partir de la liste de pairs voisins du pair contrôlé.

2. Procédé selon la revendication 1, dans lequel le procédé comporte la réitération, par le pair contrôlé, des étapes b) à d) pour chaque pair voisin de sa liste de pairs voisins même si un ou plusieurs pairs voisins de sa propre liste de pairs voisins permettent déjà de télécharger suffisamment de segments de la chaîne de télévision pour remplir à temps sa propre mémoire tampon.

3. Procédé selon l'une quelconque des revendications précédentes, dans lequel le procédé comporte :
- la connexion (88) de plusieurs pairs contrôlés au réseau pair-à-pair, chaque pair contrôlé exécutant les étapes b) à d) en parallèle et, en plus, une étape (152) de transmission de leur propre liste de pairs voisins à un même poste de recensement,
- l'établissement (154) à partir des listes de pairs voisins transmises par chaque pair contrôlé d'une table de recensement recensant l'ensemble des identifiants de pairs voisins collectés par chaque pair contrôlé, et
- la construction (170) de la mesure d'audience à partir de cette table de recensement.

4. Procédé selon la revendication 3, dans lequel le procédé comporte également :
- l'interrogation (160) en boucle de chaque pair voisin de la table de recensement,
- la réception d'une réponse à cette interrogation seulement si le pair voisin interrogé reçoit actuellement la chaîne de télévision en flux continu sur le réseau pair-à-pair, et
- en absence de réponse du pair interrogé, l'indication (164) dans la table de recensement que ce pair interrogé ne reçoit plus la chaîne de télévision et, dans le cas contraire, l'indication (162) dans la table de recensement que ce pair interrogé reçoit actuellement la chaîne de télévision.

5. Procédé selon la revendication 4, dans lequel le procédé comporte, associé à l'identifiant d'un pair voisin, l'enregistrement (142, 164):
- de l'instant auquel a été ajouté l'identifiant de ce pair voisin dans la table de recensement, et
- de l'instant auquel l'absence de réception de la chaîne de télévision par ce pair voisin a été indiquée dans la table de recensement.

6. Procédé selon l'une quelconque des revendications 3 à 5, dans lequel le procédé comporte :
- le téléchargement (182) d'un ou plusieurs segments de la chaîne de télévision à partir de la mémoire tampon d'un ou plusieurs pairs voisins dont les identifiants sont contenus dans la table de recensement, et
- la comparaison (186) d'une empreinte numérique incluse ou construite à partir du ou des segments téléchargés, à une base de données d'empreintes numériques préenregistrées, chaque empreinte numérique préenregistrée dans la base de données étant associée à un identifiant d'un contenu multimédia, et
- en cas de correspondance entre l'empreinte numérique incluse ou construite et l'une des empreintes numériques préenregistrées, l'association (188) de l'identifiant du contenu multimédia associé à l'empreinte numérique préenregistrée correspondante, à la mesure d'audience construite au même instant.

7. Procédé selon l'une quelconque des revendications précédentes, dans lequel le procédé comporte :
- l'obtention (158) d'un identifiant d'une zone géographique dans laquelle se trouve chaque pair voisin de la table de recensement à partir d'une adresse IP (Internet Protocol) sur le réseau internet du pair voisin, et
- l'association (158) de l'identifiant de la zone géographique à l'identifiant du pair voisin dans la table de recensement.

8. Procédé selon l'une quelconque des revendications 3 à 7, dans lequel les pairs contrôlés connectés au réseau ont des adresses IP sur la toile d'araignée mondiale correspondant à des pays différents répartis sur au moins trois continents différents.

9. Procédé de visualisation d'une chaîne de télévision diffusée en flux continu sur un réseau pair-à-pair, dans lequel un pair, dit classique, du réseau pair-à-pair :
a) se connecte (88) au réseau pair-à-pair de manière à recevoir la chaîne de télévision,
b) envoie (102) une requête à au moins un pair, dit voisin, du réseau pair-à-pair, un identifiant de ce pair voisin étant contenu dans sa propre liste de pairs voisins,
c) en réponse à cette requête, reçoit (94) une liste de pairs voisins recevant la même chaîne de télévision sur le réseau pair-à-pair et contenant à cet effet dans leur mémoire tampon respective des segments de la chaîne de télévision susceptibles d'être téléchargés par l'un quelconque des pairs du réseau pair-à-pair,
d) met à jour (98) sa propre liste de pairs voisins en ajoutant à cette liste des identifiants de pairs voisins présents dans la liste reçue lors de l'étape c) et qui n'étaient pas déjà présents dans sa propre liste de pairs voisins,
e) réitère les étapes b) à d) pour un nouveau pair voisin contenu dans sa propre liste de pairs voisins si le pair classique n'a pas pu identifier dans sa propre liste de pairs voisins un ou plusieurs pairs à partir de la mémoire tampon desquels il peut télécharger suffisamment de segments de la chaîne de télévision pour remplir à temps sa propre mémoire tampon, et, dans le contraire, l'arrêt des réitérations des étapes b) à d),
**caractérisé en ce que** le procédé comporte également :
f) la réitération, par un pair, dit contrôlé, connecté au réseau pair-à-pair, des étapes b) à d) pour chaque pair voisin de sa propre liste de pairs voisins même si un ou plusieurs pairs de sa propre liste de pairs voisins permettent déjà de télécharger suffisamment de segments de la chaîne de télévision pour remplir à temps sa propre mémoire tampon, et
g) la construction (170) d'une mesure d'audience à partir de la liste de pairs voisins de ce pair contrôlé.

10. Support (36, 48) d'enregistrement d'informations, **caractérisé en ce qu'**il comporte des instructions pour exécuter un procédé conforme à l'une quelconque des revendications précédentes, lorsque ces instructions sont exécutées par un calculateur électronique.

11. Pair contrôlé pour la mise en oeuvre d'un procédé conforme à l'une quelconque des revendications 1 à 9, ce pair contrôlé comportant un calculateur électronique (34) programmé pour :
a) se connecter au réseau pair-à-pair,
b) envoyer une requête à au moins un autre pair ,dit voisin, du réseau pair-à-pair, un identifiant de ce pair voisin étant contenu dans sa propre liste de pairs voisins,
c) en réponse à cette requête, recevoir une liste de pairs voisins recevant la même chaîne de télévision en flux continu sur le réseau pair-à-pair et contenant à cet effet dans leur mémoire tampon respective des segments de la chaîne de télévision susceptibles d'être téléchargés par l'un quelconque des pairs du réseau pair-à-pair,
d) mettre à jour sa propre liste de pairs voisins en ajoutant à cette liste des identifiants de pairs voisins présents dans la liste reçue lors de l'étape c) et qui n'étaient pas déjà présents dans sa propre liste de pairs voisins,
**caractérisé en ce que** le calculateur est également programmé pour:
e) réitérer les étapes b) à d) pour chaque pair voisin de sa liste de pairs voisins même si un ou plusieurs pairs voisins de sa propre liste de pairs voisins permettent déjà de télécharger suffisamment de segments de la chaîne de télévision pour remplir à temps sa propre mémoire tampon.

12. Poste (44) de recensement adapté pour mettre en oeuvre un procédé conforme à l'une quelconque des revendications 1 à 9, ce poste de recensement comportant un calculateur électronique (46) programmable et une mémoire (48), **caractérisé en ce que** le calculateur électronique est programmé pour construire la mesure d'audience à partir de la liste de pairs voisins du ou des pairs contrôlés.

## Patentansprüche

1. Publikumsmessverfahren eines Livestreaming-Fernsehkanals auf einem Peer-to-Peer-Netzwerk, wobei dieses Verfahren umfasst:
a) den Anschluss (88) mindestens eines Peers, kontrollierter Peer genannt, an das Peer-to-Peer-Netzwerk,
b) das Senden (102) einer Anfrage durch den kontrollierten Peer an mindestens einen weiteren Peer, benachbarter Peer genannt, des Peer-to-Peer-Netzwerks, wobei ein Identifikator dieses benachbarten Peers in seiner eigenen Liste von benachbarten Peers enthalten ist,
c) als Antwort auf diese Anfrage das Empfangen (94) durch das kontrollierte Peer einer Liste von benachbarten Peers, die denselben Livestreaming-Fernsehkanal auf dem Peer-to-Peer-Netzwerk empfangen und zu diesem Zweck in ihrem jeweiligen Pufferspeicher Segmente des Fernsehkanals enthalten, die geeignet sind, von einem der Peers des Peer-to-Peer-Netzwerks ferngeladen zu werden,
d) die Aktualisierung (142) durch den kontrollierten Peer seiner eigenen Liste von benachbarten Peers, wobei zu dieser Liste Identifikatoren von benachbarten Peers hinzugefügt werden, die in der in Schritt c) empfangenen Liste vorhanden sind und die nicht bereits in seiner eigenen Liste von benachbarten Peers vorhanden waren,
**dadurch gekennzeichnet, dass** das Verfahren auch die Konstruktion (170) der Publikumsmessung aus der Liste von benachbarten Peers des kontrollierten Peers umfasst.

2. Verfahren nach Anspruch 1, wobei das Verfahren die Reiteration durch den kontrollierten Peer der Schritte b) bis d) für jeden benachbarten Peer seiner Liste von benachbarten Peers umfasst, auch wenn ein oder mehrere benachbarte Peers seiner eigenen Liste von benachbarten Peers es bereits ermöglichen, ausreichend Segmente des Fernsehkanals fernzuladen, um seinen eigenen Pufferspeicher rechtzeitig zu füllen.

3. Verfahren nach einem der vorhergehenden Ansprüche, wobei das Verfahren umfasst:
- den Anschluss (88) von mehreren kontrollierten Peers an das Peer-to-Peer-Netzwerk, wobei jeder kontrollierte Peer die Schritt b) bis d) parallel ausführt, und zusätzlich einen Schritt (152) der Übertragung ihrer eigenen Liste von benachbarten Peers an eine selbe Zählstelle,
- auf Basis der von jedem kontrollierten Peer übertragenen Listen von benachbarten Peers die Erstellung (154) einer Zähltabelle, die die Gesamtheit der Identifikatoren von für jeden kontrollierten Peer gesammelten benachbarten Peers zählt, und
- die Konstruktion (170) der Publikumsmessung auf Basis dieser Zähltabelle.

4. Verfahren nach Anspruch 3, wobei das Verfahren auch umfasst:
- die Abfrage (160) in einer Schleife jedes benachbarten Peers des Zähltabelle,
- den Empfang einer Antwort auf diese Abfrage nur dann, wenn der abgefragte benachbarte Peer aktuell den Livestreaming-Fernsehkanal auf dem Peer-to-Peer-Netzwerk empfängt, und
- bei Nichtvorhandensein einer Antwort des abgefragten Peers die Anzeige (164) in der Zähltabelle, dass dieser abgefragte Peer den Fernsehkanal nicht mehr empfängt, und im umgekehrten Fall die Anzeige (162) in der Zähltabelle, dass dieser abgefragte Peer aktuell den Fernsehkanal empfängt.

5. Verfahren nach Anspruch 4, wobei das Verfahren in Verbindung mit dem Identifikator eines benachbarten Peers die Registrierung (142, 164):
- des Zeitpunktes, zu dem der Identifikator dieses benachbarten Peers in die Zähltabelle hinzugefügt wurde, und
- des Zeitpunktes, zu dem das Nichtvorhandensein eines Empfangs des Fernsehkanals durch diesen benachbarten Peer in der Zähltabelle angezeigt wurde,
umfasst.

6. Verfahren nach einem der Ansprüche 3 bis 5, wobei das Verfahren umfasst:
- das Fernladen (182) eines oder mehrere Segmente des Fernsehkanals aus dem Pufferspeicher eines oder mehrerer benachbarter Peers, deren Identifikatoren in der Zähltabelle enthalten sind, und
- das Vergleichen (186) eines eingeschlossenen oder aus dem oder den ferngeladenen Segmenten konstruierten digitalen Abdrucks mit einer Datenbasis von vorregistrierten digitalen Abdrücken, wobei jeder vorregistrierte digitale Abdruck in der Datenbasis einem Identifikator eines Multimediainhalts zugeordnet ist, und
- im Falle einer Übereinstimmung zwischen dem eingeschlossenen oder konstruierten digitalen Abdruck und einem der vorregistrierten digitalen Abdrücke das Verbinden (188) des Identifikators des dem entsprechenden vorregistrierten digitalen Abdruck zugeordneten Multimediainhalts mit der zu demselben Zeitpunkt konstruierten Publikumsmessung.

7. Verfahren nach einem der vorhergehenden Ansprüche, wobei das Verfahren umfasst:
- das Erhalten (158) eines Identifikators einer geographischen Zone, in der sich jeder benachbarte Peer der Zähltabelle ausgehend von einer IP-Adresse (Internet Protocol) im Internet des benachbarten Peers befindet, und
- das Verbinden (158) des Identifikators der geographischen Zone mit dem Identifikator des benachbarten Peers in der Zähltabelle.

8. Verfahren nach einem der Ansprüche 3 bis 7, bei dem die kontrollierten Peers, die an das Netzwerk angeschlossen sind, IP-Adressen im World Wide Web haben, die unterschiedlichen Ländern entsprechen, die auf mindestens drei verschiedenen Kontinenten verteilt sind.

9. Verfahren zur Visualisierung eines Livestreaming-Fernsehkanals auf einem Peer-to-Peer-Netzwerk, bei dem ein Peer, klassischer Peer genannt, des Peer-to-Peer-Netzwerks:
a) sich an das Peer-to-Peer-Netzwerk anschließt (88), um den Fernsehkanal zu empfangen,
b) eine Anfrage an mindestens einen Peer, benachbarter Peer genannt, des Peer-to-Peer-Netzwerks, sendet (102), wobei ein Identifikator dieses benachbarten Peers in seiner eigenen Liste von benachbarten Peers enthalten ist,
c) als Antwort auf diese Anfrage eine Liste von benachbarten Peers, die denselben Livestreaming-Fernsehkanal auf dem Peer-to-Peer-Netzwerk empfangen und zu diesem Zweck in ihrem jeweiligen Pufferspeicher Segmente des Fernsehkanals enthalten, die geeignet sind, von einem der Peers des Peer-to-Peer-Netzwerks ferngeladen zu werden, empfängt (94),
d) seine eigene Liste von benachbarten Peers aktualisiert (98), wobei zu dieser Liste Identifikatoren von benachbarten Peers hinzugefügt werden, die in der in Schritt c) empfangenen Liste vorhanden sind und die nicht bereits in seiner eigenen Liste von benachbarten Peers vorhanden waren,
e) die Schritte b) bis d) für einen neuen benachbarten Peer, der in seiner eigenen Liste von benachbarten Peers enthalten ist, reiteriert, wenn der klassische Peer in seiner eigenen Liste von benachbarten Peers nicht einen oder mehrere Peers identifizierten konnte, aus deren Pufferspeicher er ausreichend Segmente des Fernsehkanals fernladen konnte, um rechtzeitig seinen eigenen Pufferspeicher zu füllen, und im umgekehrten Fall die Reiterationen der Schritt b) bis d) angehalten werden,
**dadurch gekennzeichnet, dass** das Verfahren auch umfasst:
f) die Reiteration durch einen so genannten kontrollierten Peer, der an das Peer-to-Peer-Netzwerk angeschlossen ist, der Schritt b) bis d) für jeden benachbarten Peer seiner eigenen Liste von benachbarten Peers, auch wenn es ein oder mehrere Peers seiner eigenen Liste von benachbarten Peers bereits ermöglichen, ausreichend Segmente des Fernsehkanals fernzuladen, um rechtzeitig seinen eignen Pufferspeicher zu füllen, und
g) die Konstruktion (170) einer Publikumsmessung aus der Liste von benachbarten Peers dieses kontrollierten Peers.

10. Träger (36, 48) zur Aufzeichnung von Informationen, **dadurch gekennzeichnet, dass** er Befehle umfasst, um ein Verfahren nach einem der vorhergehenden Ansprüche auszuführen, wenn diese Befehle von einem elektronischen Rechner ausgeführt werden.

11. Kontrollierter Peer für den Einsatz eines Verfahrens nach einem der Ansprüche 1 bis 9, wobei dieser kontrollierte Peer einen elektronischen Rechner (34) umfasst, der derart programmiert ist, dass er:
a) sich an das Peer-to-Peer-Netzwerk anschließt,
b) eine Anfrage an mindestens einen weiteren Peer, benachbarter Peer genannt, des Peer-to-Peer-Netzwerks, sendet, wobei ein Identifikator dieses benachbarten Peers in seiner eigenen Liste von benachbarten Peers enthalten ist,
c) als Antwort auf diese Anfrage eine Liste von benachbarten Peers, die denselben Livestreaming-Fernsehkanal auf dem Peer-to-Peer-Netzwerk empfangen und zu diesem Zweck in ihrem jeweiligen Pufferspeicher Segmente des Fernsehkanals enthalten, die geeignet sind, von einem der Peers des Peer-to-Peer-Netzwerks ferngeladen zu werden, empfängt,
d) seine eigene Liste von benachbarten Peers aktualisiert, wobei zu dieser Liste Identifikatoren von benachbarten Peers hinzugefügt werden, die in der in Schritt c) empfangenen Liste vorhanden sind und die nicht bereits in seiner eigenen Liste von benachbarten Peers vorhanden waren,
**dadurch gekennzeichnet, dass** der Rechner auch dafür programmiert ist:
e) die Schritte b) bis d) für jeden benachbarten seiner eigenen Liste von benachbarten Peers zu reiterieren, auch wenn es ein oder mehrere Peers seiner eigenen Liste von benachbarten Peers bereits ermöglichen, ausreichend Segmente des Fernsehkanals fernzuladen, um rechtzeitig seinen Pufferspeicher zu füllen.

12. Zählstation (44), die dazu vorgesehen ist, ein Verfahren nach einem der Ansprüche 1 bis 9 einzusetzen, wobei diese Zählstation einen programmierbaren elektronischen Rechner (46) und einen Speicher (48) umfasst, **dadurch gekennzeichnet, dass** der elektronische Rechner dazu programmiert ist, die Publikumsmessung aus der Liste von benachbarten Peers des oder der kontrollierten Peers zu konstruieren.

## Claims

1. Method for measuring the audience of a television channel streamed over a peer-to-peer network, this method including:
a) the connection (88) of at least one peer, called monitored peer, to the peer-to-peer network,
b) the sending (102) by the monitored peer of a request to at least one other peer, called neighboring peer, of the peer-to-peer network, an identifier of this neighboring peer being contained in its own list of neighboring peers,
c) in reply to this request, the receiving (94) by the monitored peer of a list of neighboring peers receiving the same television channel streamed over the peer-to-peer network and containing for this purpose in their respective buffer memory chunks of the television channel likely to be downloaded by any one of the peers of the peer-to-peer network,
d) the updating (142) by the monitored peer of its own list of neighboring peers by adding to this list the identifiers of neighboring peers present in the list received in the step c) and which were not already present in its own list of neighboring peers, **characterized in that** the method also includes the construction (170) of the audience measurement from the list of neighboring peers of the monitored peer.

2. Method according to Claim 1, wherein the method includes the repetition, by the monitored peer, of the steps b) to d) for each neighboring peer of its list of neighboring peers even if one or more neighboring peers of its own list of neighboring peers already make it possible to download enough chunks of the television channel to fill its own buffer memory in time.

3. Method according to either of the preceding claims, wherein the method includes:
- the connection (88) of several monitored peers to the peer-to-peer network, each monitored peer executing the steps b) to d) in parallel and, in addition, a step (152) of transmission of their own list of neighboring peers to one and the same counting terminal,
- the establishment (154), on the basis of the lists of neighboring peers transmitted by each monitored peer, of a counting table counting all the identifiers of the neighboring peers collected by each monitored peer, and
- the construction (170) of the audience measurement on the basis of this counting table.

4. Method according to Claim 3, wherein the method also includes:
- the looped polling (160) of each neighboring peer of the counting table,
- the receiving of a reply to this poll only if the polled neighboring peer is currently receiving the television channel streamed over the peer-to-peer network, and
- in the absence of a reply from the polled peer, the indication (164) in the counting table that this polled peer is no longer receiving the television channel and, in the opposite case, the indication (162) in the counting table that this polled peer is currently receiving the television channel.

5. Method according to Claim 4, wherein the method includes, associated with the identifier of a neighboring peer, the storage (142, 164):
- of the instant at which the identifier of this neighboring peer was added to the counting table, and
- of the instant at which the absence of reception of the television channel by this neighboring peer was indicated in the counting table.

6. Method according to any one of Claims 3 to 5, wherein the method includes:
- the download (182) of one or more chunks of the television channel from the buffer memory of one or more neighboring peers, the identifiers of which are contained in the counting table, and
- the comparison (186) of a fingerprint included or constructed from the downloaded chunk or chunks, with a database of previously stored fingerprints, each fingerprint previously stored in the database being associated with an identifier of a multimedia content, and
- in the event of a match between the included or constructed fingerprint and one of the previously stored fingerprints, the association (188) of the identifier of the multimedia content associated with the corresponding previously stored fingerprint, with the audience measurement constructed at the same instant.

7. Method according to any one of the preceding claims, wherein the method includes:
- the obtaining (158) of an identifier of a geographical area wherein each neighboring peer of the counting table is found from an IP (Internet Protocol) address on the Internet of the neighboring peer, and
- the association (158) of the identifier of the geographical area with the identifier of the neighboring peer in the counting table.

8. Method according to any one of Claims 3 to 7, wherein the monitored peers connected to the network have IP addresses on the world-wide web corresponding to various countries distributed over at least three different continents.

9. Method for visualizing a television channel streamed over a peer-to-peer network, wherein a peer, called conventional peer, of the peer-to-peer network:
a) connects (88) to the peer-to-peer network in such a way as to receive the television channel,
b) sends (102) a request to at least one peer, called neighboring peer, of the peer-to-peer network, an identifier of this neighboring peer being contained in its own list of neighboring peers,
c) in reply to this request, receives (94) a list of neighboring peers receiving the same television channel over the peer-to-peer network and containing for this purpose in their respective buffer memory chunks of the television channel likely to be downloaded by any one of the peers of the peer-to-peer network,
d) updates (98) its own list of neighboring peers by adding to this list the identifiers of neighboring peers present in the list received in the step c) and which were not already present in its own list of neighboring peers,
e) repeats the steps b) to d) for a new neighboring peer contained in its own list of neighboring peers if the conventional peer has not been able to identify in its own list of neighboring peers one or more peers from the buffer memory from which it can download enough chunks of the television channel to fill its own buffer memory in time, and, in the opposite case, the stopping of the repetitions of the steps b) to d),
**characterized in that** the method also includes:
f) the repetition, by one peer, called monitored peer, connected to the peer-to-peer network, of the steps b) to d) for each neighboring peer of its own list of neighboring peers even if one or more peers from its own list of neighboring peers already make it possible to download enough chunks of the television channel to fill its own buffer memory in time, and
g) the construction (170) of an audience measurement from the list of neighboring peers of this monitored peer.

10. Information storage medium (36, 48) **characterized in that** it includes instructions for executing a method in accordance with any one of the preceding claims, when these instructions are executed by an electronic computer.

11. Monitored peer for implementing a method in accordance with any one of Claims 1 to 9, this monitored peer including an electronic computer (34) programmed to:
a) connect to a peer-to-peer network,
b) send a request to at least one other peer, called neighboring peer, of the peer-to-peer network, an identifier of this neighboring peer being contained in its own list of neighboring peers,
c) in reply to this request, receive a list of neighboring peers receiving the same television channel streamed over the peer-to-peer network and containing for this purpose in their respective buffer memory chunks of the television channel likely to be downloaded by any one of the peers of the peer-to-peer network,
d) update its own list of neighboring peers by adding to this list the identifiers of neighboring peers present in the list received in the step c) and which were not already present in is own list of neighboring peers,
**characterized in that** the computer is also programmed to:
e) repeat the steps b) to d) for each neighboring peer of its list of neighboring peers, even if one or more neighboring peers from its own list of neighboring peers already make it possible to download enough chunks of the television channel to fill its own buffer memory in time.

12. Counting terminal (44) suitable for implementing a method in accordance with any one of Claims 1 to 9, this counting terminal including a programmable electronic computer (46) and a memory (48), **characterized in that** the electronic computer is programmed to construct the audience measurement from the list of neighboring peers of the monitored peer or monitored peers.
